# EUROPÄISCHE PATENTSCHRIFT

(11) **EP 3 847 064 B1**
(45) Veröffentlichungstag und Bekanntmachung des Hinweises auf die Patenterteilung: **22.03.2023**
(21) Anmeldenummer: 19778852.4
(22) Anmeldetag: 16.09.2019
(51) Int. Cl.: B60T 15/50

(54) **PNEUMATISCHE BREMSE FÜR EIN SCHIENENFAHRZEUG**
PNEUMATIC BRAKE FOR A RAIL VEHICLE
FREIN PNEUMATIQUE POUR VÉHICULE FERROVIAIRE

(30) Priorität: 16.10.2018 AT 508942018
(43) Veröffentlichungstag der Anmeldung: 14.07.2021
(73) Patentinhaber: Siemens Mobility Austria GmbH, 1210 Wien (AT)
(72) Erfinder: HÖRMANN, Christoph, 1160 Wien (AT); SCHNEIDER, Harald, 1100 Wien (AT)
(74) Vertreter: Siemens Patent Attorneys
(86) Internationale Anmeldenummer: PCT/EP2019/074699
(87) Internationale Veröffentlichungsnummer: WO 2020/078637

(56) Entgegenhaltungen:
- DE-A1- 2 924 220
- DE-B1- 2 714 723
- US-A- 4 025 126

## Beschreibung

### Technisches Gebiet

Die Erfindung betrifft eine pneumatische Bremse für ein Schienenfahrzeug.

### Stand der Technik

Schienenfahrzeuge sind in der überwiegenden Mehrheit mit pneumatischen Bremsen ausgestattet. Dabei sind zwei wesentliche Ausführungsformen zu unterscheiden. Bei einer ersten Ausführung, welche meist bei Vollbahnen eingesetzt wird, wirkt der pneumatische Druck in einem Zylinder und presst einen Reibbelag an eine Gegenfläche. Die Druckluftversorgung erfolgt dabei über eine sich durch den gesamten Zug erstreckende Druckluftleitung, mittels welcher in den Wagen angeordnete Hilfsluftbehälter gefüllt werden. Die Betätigung der Bremsen wird durch Absenken des Drucks in der Druckluftleitung eingeleitet, wobei ein Steuerventil den in den Hilfsluftbehältern gespeicherten Druck zum Anpressen der Reibbeläge einsetzt. Diese Ausführung weist den Vorteil auf, dass bei einem Ausfall der Druckversorgung bzw. bei Auftreten eines Lecks automatisch eine Bremsung durchgeführt wird. Bei anderen Bahnen, beispielsweise U-Bahnen werden auch Bremsen eingesetzt, bei welchen der pneumatische Druck zum Anpressen der Bremsbeläge durch ein elektrisch angesteuertes Bremsventil geregelt wird. Bei dieser Ausführungsform ist ein Defekt des pneumatischen Systems kritischer, außerdem werden häufig eine Reihe weiterer Systeme aus demselben Druckluftsystem versorgt (Türantriebe, Kupplungsbetätigung, Spurkranzschmierung, etc.) sodass die Anzahl potentiell fehlerhafter Bauteile und somit die Ausfallswahrscheinlichkeit der gesamten Druckluftanlage ansteigen. Dem kann durch eine Erhöhung der Redundanz begegnet werden, wobei beispielsweise Luftkompressoren mehrfach über den Zug verteilt vorgesehen werden. Auch bei Ausfall einer Komponente, beispielsweise aller Bremsen eines Fahrwerks müssen die zur Zulassung erforderlichen Bremsverzögerungswerte weiterhin gewährleistet sein. Dazu können sogenannte Bremsluftbehälter eingesetzt werden, die für die unmittelbaren Bremsvorgänge erforderliche Druckluft speichern und somit einen Puffer zwischen der Bremsanlage und der allgemeinen Druckluftversorgung bilden. Dadurch können auch bei Ausfall der allgemeinen Druckluftversorgung noch einige Bremsvorgänge durchgeführt werden, da die eigentliche Bremsanlage über ein Rückschlagventil mit der allgemeinen Druckluftversorgung verbunden ist, welches bei einem Abfall des Luftdrucks in der allgemeinen Druckluftversorgung ein Rückströmen aus der Bremsanlage verhindert. Ein Bremsluftbehälter kann je Fahrwerk vorgesehen sein, sodass ein eventueller Ausfall eines Bremsluftbehälters die Bremsen eines Fahrwerks betrifft. Ist jedoch nur ein Bremsluftbehälter je Fahrzeug vorgesehen, so wären bei einem Ausfall (Undichtigkeit, Zerstörung, Abfall vom Fahrzeug, usw.) des Bremsluftbehälters alle Bremsen eines Fahrzeugs außer Betrieb. Ebenso bewirkt ein Ausfall eines Bremsluftbehälters, dass die restliche Druckluftanlage, z.B. die Türantriebe, ebenfalls nicht mehr betriebsfähig werden. Da der Bauraum an den Fahrwerken bzw. unter dem Untergestell begrenzt ist, ist es wünschenswert nur einen Bremsluftbehälter je Wagen vorsehen zu müssen, was bei dessen Ausfall jedoch den Verlust aller Bremsen eines Wagens bewirkt.

Aus dem Stand der Technik sind pneumatische Bremsanlagen bekannt, so ist in der Patentschrift US US4025126A eine solche offenbart, welche für Schienenfahrzeuge geeignet ist und bei welcher der an den Bremsbelägen anliegende Bremsdruck durch Absenkung des Drucks in einer Steuerleitung moduliert wird und ein konstanter Arbeitsdruck für den Betrieb der Bremszylinder vorgesehen ist, welcher durch Druckbehälter gestützt ist.

### Darstellung der Erfindung

Der Erfindung liegt daher die Aufgabe zugrunde, eine pneumatische Bremse für ein Schienenfahrzeug anzugeben, welche auch bei Ausfall eines Bremsluftbehälters betriebsfähig bleibt.

Die Aufgabe wird durch eine pneumatische Bremse für ein Schienenfahrzeug mit den Merkmalen des Anspruchs 1 und einem Schienenfahrzeug gemäß Anspruch 5 gelöst. Vorteilhafte Ausgestaltungen sind Gegenstand untergeordneter Ansprüche.

Dem Grundgedanken der Erfindung nach wird eine pneumatische Bremse für ein Schienenfahrzeug beschrieben, bei welcher bei einem Bremsvorgang mittels pneumatischen Drucks aus einem Bremsluftbehälter Reibbeläge an Reibpartner angepresst werden und wobei der Bremsluftbehälter aus einer Druckluftversorgung gespeist ist und wobei die Füllung und der Abfluss von Druckluft aus dem Bremsluftbehälter über eine Strömungsbegrenzungseinrichtung erfolgt.

Dadurch ist der Vorteil erzielbar, dass auch bei einem Verlust der Druckhaltung in dem Bremsluftbehälter die Funktionsfähigkeit der Bremsen weiterhin, zumindest mit reduzierter Bremsleistung gegeben bleibt. Es ist dabei unerheblich, aufgrund welchen Versagens die Druckhaltung in dem Bremsluftbehälter reduziert oder ausgefallen ist. Ist die Druckluftversorgung in dem Fahrzeug gegeben, so können auch bei Ausfall des Bremsluftbehälters weiterhin Bremsungen ausgeführt werden.

Erfindungsgemäß ist in der Zuleitung zu dem Bremsluftbehälter eine Strömungsbegrenzungseinrichtung angeordnet, über welche jeder Zu- und Abfluss von Druckluft erfolgt.

Tritt ein Ausfall der Druckhaltung in dem Bremsluftbehälter ein, so reduziert die Strömungsbegrenzungseinrichtung den aus der Bremsanlage abfließenden Volumenstrom der Druckluft auf ein solches Maß, welches aus der Druckluftversorgung nachgeliefert werden kann ohne dass dabei ein übermäßiger Druckabfall erfolgt.

Bei der Füllung des Bremsluftbehälters ist der Einsatz dieser Strömungsbegrenzungseinrichtung unerheblich, da so zwar die Füllung langsamer erfolgt, was aufgrund der im Vergleich zu den Füllzeiten wesentlich kürzeren Bremsaufbauzeit keinen Nachteil darstellt. Die Füllung des Bremsluftbehälters aus der Druckluftversorgung erfolgt sowohl während der Fahrt als auch während des Stillstands des Fahrzeugs, nur unmittelbar während des Druckaufbaus in den Bremszylindern wird Druckluft aus dem Bremsluftbehälter entnommen. Bei mit einem Gleitschutz ausgestatteten Fahrzeugen erfolgt bei einer Bremsung mit einem Eingriff des Gleitschutzsystems ein wiederholtes Ablassen von Druckluft und anschließendes Wiederbefüllen der Bremszylinder, wodurch der Druckluftverbrauch erhöht ist. Eine erfindungsgemäße Bremse kann auch in diesem Betriebszustand den Druckluftbedarf für die Bremsung zur Verfügung stellen.

Eine erste vorteilhafte Ausführungsform der Erfindung sieht den Aufbau der Strömungsbegrenzungseinrichtung aus einer Parallelschaltung eines Rückschlagventils mit einer Drossel vor. Dabei ist die Durchlassrichtung des Rückschlagventils von dem Bremsluftbehälter zu der Bremsanlage hin ausgerichtet. Solcherart kann während des Bremsvorgangs rasch Druckluft aus dem Bremsluftbehälter zu den Bremszylindern fließen, sodass auch bei Einsatz der Erfindung kein nachteiliges Bremsverhalten eintritt, da der Bremsdruck ebenso rasch aufgebaut werden kann wie ohne die Strömungsbegrenzungseinrichtung. Bei einem Verlust der Druckhaltung in dem Bremsluftbehälter strömt Druckluft aus der Druckluftversorgung über die Düse in die Umgebung, nicht hingegen über das sich in diesem Fall selbst schließende Rückschlagventil. Der sich durch das Ausströmen der Druckluft über die Düse einstellende Druckabfall in der pneumatischen Anlage ist von dem offenen Querschnitt der Düse bestimmt. Die Düse ist so zu bemessen, das sich im Fehlerfall kein unzulässig niederer Druck in der Bremsanlage einstellt welcher das Bremsverhalten, d.h. die mögliche Bremsverzögerung reduziert. Dabei kann die Düse mit einem festen Querschnitt versehen sein oder es kann eine variable, einstellbare Düse eingesetzt werden.

Eine bevorzugte Ausführungsform der Erfindung sieht vor, das Rückschlagventil und die Düse als Einheit mit einem gemeinsamen Gehäuse auszuführen. Durch diese Ausführung als Drosselrückschlagventil kann der Aufwand für die pneumatische Verrohrung der Bremsanlage reduziert werden.

Eine weitere bevorzugte Ausführungsform der Erfindung sieht vor, die Strömungsbegrenzungseinrichtung in Form eines Überströmventils auszuführen. Ein solches Überströmventil erlaubt einen Fluss der Druckluft erst ab einem bestimmten absoluten Druck und es umfasst in einer Ausführungsform ein Rückschlagventil für die Entleerungsrichtung aus dem Bremsluftbehälter in Richtung der Bremsen. Durch den Einsatz eines Überströmventils erfolgt auch im Fehlerfall kein Druckverlust in der Bremsanlage.

### Kurzbeschreibung der Zeichnungen

Es zeigen beispielhaft:
**Fig.1** Bremsanlage mit einer Strömungsbegrenzungseinrichtung.
**Fig.2** Bremsanlage mit einer Strömungsbegrenzungseinrichtung in Form eines Überströmventils.

### Ausführung der Erfindung

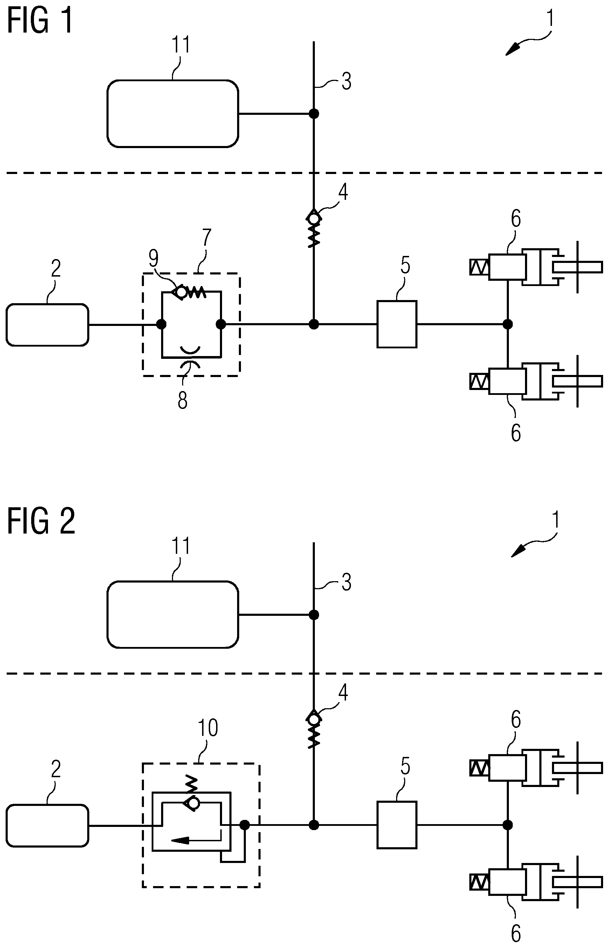

**Fig.1** zeigt beispielhaft und schematisch eine Bremsanlage mit einer Strömungsbegrenzungseinrichtung. Es ist das pneumatische Schaltbild eines Teils einer Druckluftanlage eines Schienenfahrzeugs mit einer pneumatischen Bremse 1 dargestellt. Eine Druckluftversorgung 3 ist mit einem Hauptluftbehälter 11 ausgestattet, welcher der Speicherung von Druckluft dient, sodass auch bei kurzzeitig hohem Druckluftbedarf der Druck in der pneumatischen Anlage nicht stark absinkt. Die Druckluftanlage umfasst eine Vielzahl weiterer Komponenten wie Kompressoren, Druckregler, Messeinrichtungen sowie Verbraucher wie Türantriebe, Klapptrittantriebe usw. Diese sind zur Vereinfachung der Darstellung in Fig.1 nicht gezeigt. Die pneumatische Bremsanlage 1 ist aus der allgemeinen Druckluftanlage mit Druckluft versorgt, wobei ein Bremsenrückschlagventil 4 den Rückfluss von Druckluft aus der pneumatischen Bremsanlage 1 in die allgemeine Druckluftanlage verhindert. Somit bleibt der Druck in der pneumatischen Bremsanlage 1 auch dann erhalten, wenn die allgemeine Druckluftanlage z.B. durch ein Gebrechen einer ihrer Komponenten außer Betrieb ist und der Druck in ihr absinkt oder komplett entweicht. Die pneumatische Bremsanlage 1 umfasst ein Bremsventil 5, welches vom Fahrpersonal oder der Fahrzeugsteuerung ansteuerbar ist und welches dabei einen der gewünschten Bremsverzögerung proportionalen pneumatischen Druck an die Bremsaktuatoren 6 leitet. Die Bremsaktuatoren 6 umfassen je einen pneumatischen Zylinder, dessen Kraftwirkung zum Anpressen von Bremsbelägen an Bremsscheiben eingesetzt wird. In gezeigtem Ausführungsbeispiel sind zwei Bremsaktuatoren 6 in der Ausführung als Scheibenbremsen dargestellt. Die Anzahl und Ausführung der Bremsaktuatoren 6 ist jedoch ohne Belang. Die pneumatische Bremse 1 ist des Weiteren mit einem Bremsluftbehälter 2 ausgestattet, welcher einen ausschließlich für Bremsungen zur Verfügung stehenden Luftvorrat speichert und welcher auch über das Bremsenrückschlagventil 4 aus der Druckluftversorgung 3 gefüllt wird. Im Fall eines Defekts (Verlust der Druckhaltung) dieses Bremsluftbehälters 2 würde bei konventionellen Bremsanlagen der Pneumatikdruck in Abhängigkeit von dem Querschnitt der Öffnung durch welche Druckluft entweicht und dem aus der Druckluftversorgung 3 nachströmenden Volumenstrom der pneumatische Druck in der pneumatischen Bremse 1 so stark absinken, dass ggf. keine Bremsung mehr möglich wäre. Erfindungsgemäß ist deshalb in der Zuleitung zu dem Bremsluftbehälter 2 ein Drosselrückschlagventil 7 angeordnet, welches eine Parallelschaltung einer Drossel 8 und eines Rückschlagventils 9 umfasst. Bei einem Verlust der Druckhaltung des Bremsluftbehälters 2 entlüftet die pneumatische Bremse 1 somit über die Drossel 8 ins Freie, wobei aufgrund der durch die Düse 8 eingeschränkten Ausströmöffnung der Druckabfall in der pneumatischen Bremse 1 stark reduziert ist und jedenfalls noch Bremsungen zulässt solange die Druckluftversorgung 3 in Betrieb ist. Das zur Düse 8 parallelgeschaltete Rückschlagventil 9 erlaubt eine rasche, von der Düse 8 unbeeinflusste Druckluftentnahme aus dem Bremsluftbehälter 2 im Normalbetrieb. Die Füllung des Bremsluftbehälters 2 erfolgt aus der Druckluftversorgung 3 aufgrund der Düse 8 etwas verlangsamt. In konkreten Ausführungsformen sind auch Druckmessgeräte an der pneumatischen Bremse 1 vorgesehen, mittels welcher ein Druckabfall erkennbar ist, diese sind in Fig.1 nicht dargestellt.

**Fig.2** zeigt beispielhaft und schematisch eine Bremsanlage mit einer Strömungsbegrenzungseinrichtung in Form eines Überströmventils. Es ist das pneumatische Schaltbild eines Teils einer Druckluftanlage eines Schienenfahrzeugs mit einer pneumatischen Bremse 1 wie in Fig. 1 dargestellt. Bis auf die Strömungsbegrenzungseinrichtung sind alle Komponenten identisch. In dem gezeigten Ausführungsbeispiel ist diese Strömungsbegrenzungseinrichtung in Form eines Überströmventils 10 aufgebaut, welches bei einem Verlust der Druckhaltung des Bremsluftbehälters 2 ein unbeschränktes Ausströmen von Druckluft verhindert und somit ein für Bremsungen ausreichender Luftdruck in der pneumatischen Bremse 1 verbleibt.

### Liste der Bezeichnungen

- 1: Pneumatische Bremse
- 2: Bremsluftbehälter
- 3: Druckluftversorgung
- 4: Bremsenrückschlagventil
- 5: Bremsventil
- 6: Bremsaktuator
- 7: Drosselrückschlagventil
- 8: Drossel
- 9: Rückschlagventil
- 10: Überströmventil
- 11: Hauptluftbehälter

## Patentansprüche

1. Pneumatische Bremse (1) für ein Schienenfahrzeug, wobei bei einem Bremsvorgang mittels pneumatischen Drucks aus einem Bremsluftbehälter (2) Reibbeläge an Reibpartner angepresst werden und wobei der Bremsluftbehälter (2) aus einer Druckluftversorgung (3) gespeist ist,
**dadurch gekennzeichnet, dass**
die Füllung und der Abfluss von Druckluft aus dem Bremsluftbehälter (2) über eine aus einer Parallelschaltung eines Rückschlagventils (9) und einer Drossel (8) bestehende Strömungsbegrenzungseinrichtung, oder einem Überströmventil (10) als Strömungsbegrenzungseinrichtung erfolgt.

2. Pneumatische Bremse (1) für ein Schienenfahrzeug nach Anspruch 1,
**dadurch gekennzeichnet, dass** die Strömungsbegrenzungseinrichtung als Drosselrückschlagventil (7) mit einem Rückschlagventil (9) und einer Drossel (8) in einem gemeinsamen Gehäuse ausgeführt ist.

3. Schienenfahrzeug, umfassend eine pneumatische Bremse (1) nach einem der Ansprüche 1 oder 2.

## Claims

1. Pneumatic brake (1) for a rail vehicle, wherein during a braking operation friction linings are pressed onto friction partners by means of pneumatic pressure from a brake air reservoir (2) and wherein the brake air reservoir (2) is fed from a compressed air supply (3),
**characterised in that**
the filling and outflow of compressed air from the brake air reservoir (2) takes place via a flow limiting device consisting of a parallel connection of a non-return valve (9) and a restrictor (8), or an overflow valve (10) as flow limiting device.

2. Pneumatic brake (1) for a rail vehicle according to claim 1,
**characterised in that** the flow limiting device is embodied as a restrictor non-return valve (7) with a non-return valve (9) and a restrictor (8) in one common housing.

3. Rail vehicle, comprising a pneumatic brake (1) according to one of claims 1 or 2.

## Revendications

1. Frein pneumatique (1) pour un véhicule ferroviaire, dans lequel, lors d'un processus de freinage, des garnitures de friction sont pressées contre un partenaire de friction au moyen d'une pression pneumatique provenant d'un réservoir d'air de freinage (2) et dans lequel le réservoir d'air de freinage (2) est alimenté à partir d'une alimentation en air comprimé (3),
**caractérisé en ce que**
le remplissage du réservoir d'air de freinage (2) et la sortie d'air comprimé à partir de celui-ci s'effectuent au moyen d'un dispositif de limitation de débit d'écoulement constitué d'un montage parallèle d'un clapet anti-retour (9) et d'un étranglement (8), ou d'une soupape de décharge (10) servant de dispositif de limitation de débit d'écoulement.

2. Frein pneumatique (1) pour un véhicule ferroviaire selon la revendication 1,
**caractérisé en ce que** le dispositif de limitation de débit d'écoulement est réalisé sous la forme d'un clapet anti-retour d'étranglement (7) avec un clapet anti-retour (9) et un étranglement (8) dans un boîtier commun.

3. Véhicule ferroviaire comprenant un frein pneumatique (1) selon l'une quelconque des revendications 1 à 2.
